# EUROPEAN PATENT APPLICATION

(11) **EP 4 779 561 A1**
(43) Date of publication of application: **22.07.2026**
(21) Application number: 24888336.5
(22) Date of filing: 22.08.2024
(51) Int. Cl.: G06T 7/00

(54) **FOREIGN MATTER DETECTION DEVICE AND FOREIGN MATTER DETECTION METHOD**

(30) Priority: 10.11.2023 JP 2023192560
(71) Applicant: JFE Steel Corporation, Tokyo 100-0011 (JP)
(72) Inventor: ISHIGAKI, Yusuke, Tokyo 100-0011 (JP); NAGAYA, Hiroki, Tokyo 100-0011 (JP); NISHINA, Yoshiaki, Tokyo 100-0011 (JP); NAKAMURA, Tomokazu, Tokyo 100-0011 (JP); MATSUMOTO, Masato, Tokyo 100-0011 (JP); ISHIWARI, Masatoshi, Tokyo 100-0011 (JP); IKAGAWA, Toru, Tokyo 100-0011 (JP)
(74) Representative: Hoffmann Eitle
(86) International application number: PCT/JP2024/029903
(87) International publication number: WO 2025/100034

(57) **Abstract**

A foreign matter detection device (10) is a foreign matter detection device for detecting foreign matter contained in scrap and includes an image acquisition unit (131) configured to acquire an image captured by a camera that moves in accordance with an operation unit performing a predetermined operation on the scrap and captures an image of the surroundings of the operation unit, and a determination unit (132) configured to detect a foreign matter candidate based on the image and determine whether foreign matter is present based on the result of detecting the foreign matter candidate.

## Description

### TECHNICAL FIELD

The present disclosure relates to a foreign matter detection device and a foreign matter detection method. The present disclosure relates in particular to a foreign matter detection device and a foreign matter detection method that detect foreign matter contained in scrap.

### BACKGROUND

In the production of steel products, it is desirable to increase the use of ferrous scrap as an iron raw material in order to reduce the environmental impact. When scrap is melted to produce steel products, it is necessary to remove foreign matter such as non-ferrous materials and sealed objects beforehand. To remove foreign matter from the scrap, it is necessary to determine whether foreign matter is included in the scrap.

In recent years, object recognition technology has been developed that uses deep learning to identify pre-trained objects from captured images of a target object. Object recognition technology can also be applied to detecting foreign matter in images of scrap as a target object. For example, Patent Literature (PTL) 1 proposes a system that uses a camera installed in a scrap yard to detect sealed objects included in a collection of ferrous scrap.

### CITATION LIST

### Patent Literature

PTL 1: JP 2021-86285 A

### SUMMARY

### (Technical Problem)

The technology of PTL 1 uses a plurality of cameras to capture images of ferrous scrap piled up in a scrap yard, ferrous scrap lifted by a crane, and ferrous scrap loaded onto a truck or ship. However, the scrap yard is large and contains multiple scrap piles. Therefore, it is difficult to capture images of only the target scrap with the cameras. Furthermore, when the target scrap is positioned far from a camera, it is difficult to capture a highly accurate image of the scrap, which reduces the accuracy of detecting foreign matter from the captured image.

In view of the above circumstances, it is an aim of the present disclosure to provide a foreign matter detection device and a foreign matter detection method that can identify foreign matter with high accuracy from a captured image of target scrap.

### (Solution to Problem)

(1) A foreign matter detection device according to an embodiment of the present disclosure is
   a foreign matter detection device for detecting foreign matter contained in scrap, the foreign matter detection device comprising:
   an image acquisition unit configured to acquire an image captured by a camera that moves in accordance with an operation unit performing a predetermined operation on the scrap and captures an image of surroundings of the operation unit; and
   a determination unit configured to detect a foreign matter candidate based on the image and determine whether foreign matter is present based on a result of detecting the foreign matter candidate.
(2) As an embodiment of the present disclosure, in (1),
   the operation unit is an arm of heavy machinery, and the camera is attached to the heavy machinery or the arm.
(3) As an embodiment of the present disclosure, in (1) or (2),
   the camera captures a plurality of images with different fields of view, and
   the determination unit is configured to detect the foreign matter candidate in each of the plurality of images and determine whether the foreign matter is present based on a result of detecting the foreign matter candidate in the plurality of images.
(4) As an embodiment of the present disclosure, in (3),
   the image acquisition unit is configured to acquire the plurality of images at time intervals of 30 seconds or less.
(5) A foreign matter detection method according to an embodiment of the present disclosure is
   a foreign matter detection method for detecting foreign matter contained in scrap, the method comprising:
   acquiring an image captured by a camera that moves in accordance with an operation unit performing a predetermined operation on the scrap and captures an image of surroundings of the operation unit; and
   detecting a foreign matter candidate based on the image and determining whether foreign matter is present based on a result of detecting the foreign matter candidate.

### (Advantageous Effect)

According to the present disclosure, a foreign matter detection device and a foreign matter detection method that can identify foreign matter with high accuracy from a captured image of target scrap can be provided.

### BRIEF DESCRIPTION OF THE DRAWINGS

In the accompanying drawings:
FIG. 1 is a schematic diagram illustrating an example configuration of a foreign matter detection system including a foreign matter detection device according to an embodiment of the present disclosure;
FIG. 2 is a flowchart illustrating processing of a foreign matter detection method according to an embodiment of the present disclosure; and
FIG. 3 is a diagram illustrating an example of N images.

### DETAILED DESCRIPTION

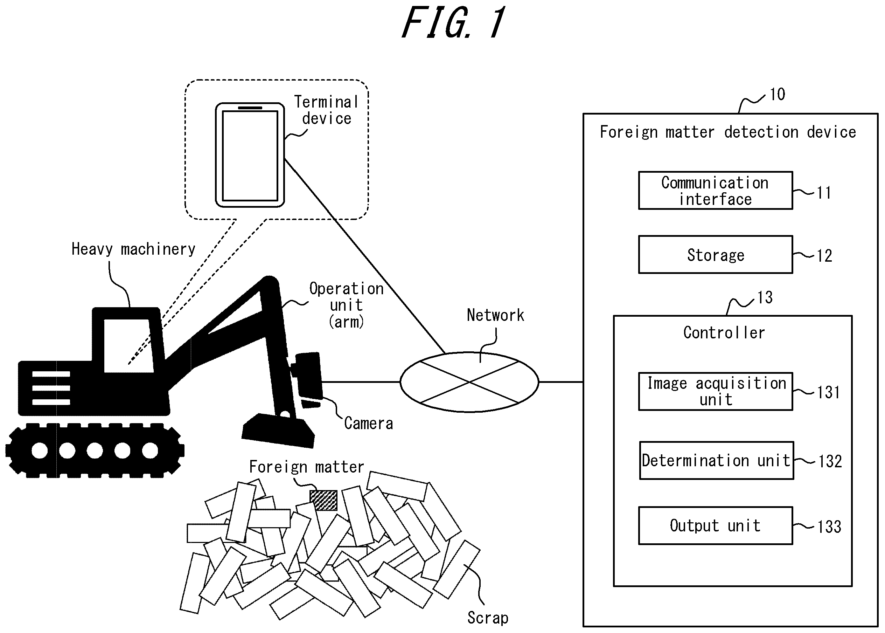

Hereinafter, a foreign matter detection device 10 (see FIG. 1) and a foreign matter detection method according to an embodiment of the present disclosure will be described with reference to the drawings.

### (Foreign matter detection system)

FIG. 1 is a schematic diagram illustrating an example configuration of a foreign matter detection system including a foreign matter detection device 10 according to an embodiment of the present disclosure. FIG. 1 is a block diagram illustrating the internal configuration of the foreign matter detection device 10. The foreign matter detection device 10 is a device that detects foreign matter contained in scrap based on an image of the scrap.

In the example of FIG. 1, the foreign matter detection device 10 is used to inspect ferrous scrap using heavy machinery with an arm. Ferrous scrap is used as an iron raw material in the production of steel products. When scrap is melted to produce steel products, it is necessary to remove foreign matter (such as non-ferrous materials and sealed objects) beforehand. To remove foreign matter from the scrap, the foreign matter detection device 10 determines whether foreign matter is present in the scrap. Here, a lifting magnet for transporting and moving scrap is provided at the tip of the arm of the heavy machinery. The scrap is stored on the ground (yard) as scrap piles. To detect and remove foreign matter, workers operating heavy machinery with an arm spread the scrap so that the pile is flat (hereinafter referred to as "levelling work"). Here, a scrap pile means a collection of scrap accumulated in a pile. In the following description, the unit that performs predetermined operations on scrap is referred to as the operation unit. In the example of FIG. 1, the operation unit is the arm of heavy machinery that performs levelling work. Here, the operation unit is not limited to the arm of heavy machinery but may, for example, be a lifting magnet that moves along a rail. Furthermore, the predetermined operation is not limited to levelling work but may, for example, be operations such as transporting, moving, or lifting scrap. In the example of FIG. 1, the worker is also the driver who operates the heavy machinery.

The foreign matter detection device 10 includes a communication interface 11, a storage 12, and a controller 13. The controller 13 includes an image acquisition unit 131, a determination unit 132, and an output unit 133. The foreign matter detection device 10 may have the hardware configuration of a computer, for example. The computer may be a server computer or may be a portable computer such as a laptop or tablet. The components of the foreign matter detection device 10 will be described in detail later. The foreign matter detection device 10 need not be a single device and may be configured by a plurality of devices that are placed in a plurality of locations and are capable of transmitting and receiving data to and from each other via a network. In other words, a plurality of devices connected via a network may function as a whole as the foreign matter detection device 10 illustrated in FIG. 1. For example, the foreign matter detection device 10 may have a hardware configuration including one computer, or a plurality of computers connected via a network. In the case of configuration by a plurality of computers, the storage 12 may be a shared memory that can be accessed by each computer. In the present embodiment, the foreign matter detection device 10 is described as a server computer installed at a location away from the yard where the scrap pile is placed, but the foreign matter detection device 10 may be any type of computer located in the yard. As another configuration example, the foreign matter detection device 10 may be a small computer built into a camera, or the foreign matter detection device 10 may be integrated with a terminal device used by a worker.

The foreign matter detection device 10 may constitute a foreign matter detection system together with devices connected via a network. The network is, for example, the Internet. Furthermore, part of the network may be configured to include, for example, a local area network (LAN). In the present embodiment, the foreign matter detection system includes a camera attached to heavy machinery or an arm. The camera moves in accordance with the operation unit (arm) and captures images of the surroundings of the operation unit. Since the heavy machinery or arm moves relative to the scrap pile during operation, the camera captures images of the scrap pile from a plurality of different directions (angles). That is, the worker can capture images of the scrap pile from a plurality of different directions (angles) simply by operating the heavy machinery and performing normal work (in other words, without having to operate the camera separately). Furthermore, by the camera being provided facing the lifting magnet as illustrated in FIG. 1, the surroundings of the tip of the arm can reliably be captured by the camera. In the present embodiment, the camera has a communication function and can output captured images to the foreign matter detection device 10 via a network. The camera may also be configured to output the captured images to the foreign matter detection device 10 via a terminal device.

In the present embodiment, the foreign matter detection system is configured to include a terminal device used by a worker performing work in the yard. The terminal device has at least a function of transmitting information regarding whether foreign matter is present (specifically, a determination result or the like) to the worker. The terminal device may be a general-purpose mobile terminal, such as a smartphone or a tablet, but is not limited to these examples. Here, the terminal device has a communication function and can acquire information regarding whether foreign matter is present from the foreign matter detection device 10 via a network.

As described above, the camera has a communication function, captures images of the scrap that is the work target during the levelling work, and outputs image data to the foreign matter detection device 10 via the network. In the present embodiment, the camera captures a plurality of images of the scrap that is the work target at predetermined time intervals, the images having a different field of view (direction and angle of view). In the present embodiment, the camera is mounted on the arm of heavy machinery, and therefore the position and orientation of the camera change in accordance with the worker's manipulation of the position and orientation of the arm during levelling work. Here, the plurality of images may be captured while the scrap pile is being spread out or may be captured by changing the field of view while the scrap pile remains unchanged. As described below, in the present embodiment, the result of the determination, based on a plurality of images, of whether foreign matter is present is notified to the terminal device used by the worker. Therefore, workers who are also the operators of heavy machinery can detect foreign matter with high accuracy without increasing their workload (i.e., by simply operating the heavy machinery as usual) and can efficiently inspect ferrous scrap.

### (Foreign matter detection device)

The components of the foreign matter detection device 10 will be described in detail below. The communication interface 11 includes one or more communication modules that connect to the network. The communication interface 11 may include a communication module compatible with mobile communication standards such as 4G (4^{th} Generation) and 5G (5^{th} Generation). The communication interface 11 may include a communication module compatible with a wired or wireless LAN standard, for example.

The storage 12 includes one or more memories. The memories can be any memory, including but not limited to a semiconductor memory, a magnetic memory, or an optical memory. The storage 12 is, for example, built into the foreign matter detection device 10, but may also be configured to be accessed externally by the foreign matter detection device 10 via any interface.

The storage 12 stores various data used in various calculations executed by the controller 13. In addition, the storage 12 may store results and intermediate data of various calculations executed by the controller 13.

The storage 12 may temporarily store various types of information from devices connected via a network. In the present embodiment, the storage 12 stores a plurality of images of the scrap pile captured by the camera at predetermined time intervals and with different fields of view. In addition, in the present embodiment, the storage 12 stores whether a foreign matter candidate is present as determined by the determination unit 132 in association with each of the plurality of images. The storage 12 may also store whether foreign matter is present, the position of foreign matter, and the like as determined by the determination unit 132. Here, a foreign matter candidate refers to foreign matter determined in one image. As will be described later, in the present embodiment, the presence of final foreign matter is determined based on a plurality of images. Therefore, to distinguish from the final foreign matter, the foreign matter determined in one image is called a "foreign matter candidate".

The controller 13 is at least one processor. The processor can, for example, be a general-purpose processor or a dedicated processor specialized for particular processing, but the processor is not limited to these examples and may be any processor. The controller 13 controls overall operation of the foreign matter detection device 10.

Here, the foreign matter detection device 10 may have the following software configuration. At least one program used to control operation of the foreign matter detection device 10 is stored in the storage 12. The program stored in the storage 12, when read by the processor of the controller 13, causes the controller 13 to function as the image acquisition unit 131, the determination unit 132, and the output unit 133.

The image acquisition unit 131 acquires images captured by the camera. In the present embodiment, the image acquisition unit 131 acquires a plurality of images with different fields of view captured by the camera. Here, the interval (acquisition interval) at which the image acquisition unit 131 acquires images may be the aforementioned predetermined time interval, i.e., the camera's capturing interval, but may be longer than the predetermined time interval. To acquire a plurality of images with different fields of view efficiently, the acquisition interval of the image acquisition unit 131 may be set based on the travel speed of the heavy machinery, the operating speed of the arm, or the like. However, the acquisition interval is preferably short enough so that there is no change in the target scrap pile during the predetermined work (levelling work in the present embodiment). For example, the acquisition interval is 30 seconds or less. This is because if the acquisition interval is too long, the heavy machinery may move to a different scrap pile during the acquisition interval, resulting in different scrap piles being captured in the acquired plurality of images. Therefore, the image acquisition unit 131 preferably acquires the plurality of images at time intervals of 30 seconds or less.

The determination unit 132 detects a foreign matter candidate based on the images acquired by the image acquisition unit 131 and determines whether foreign matter is present in the scrap pile based on the result of detecting the foreign matter candidate. In the present embodiment, the number of images acquired by the image acquisition unit 131 is at least N (N being an integer equal to or greater than 2). The determination unit 132 detects a foreign matter candidate in each of the plurality of images and determines whether foreign matter is present based on the result of detecting the foreign matter candidate in the plurality of images. In addition to whether foreign matter is present, the location of the foreign matter may be determined. The details of determining whether foreign matter is present will be described later.

The output unit 133 outputs information about whether foreign matter is present, including the result of determination by the determination unit 132, to a terminal device or the like. The information regarding whether foreign matter is present may be audio, image, or text information. If the terminal device is, for example, a speaker and can convey information to the worker by voice, the output unit 133 may output voice information regarding whether foreign matter is present. If the terminal device is, for example, equipped with a display and can convey information to the worker by images, the output unit 133 may output image information regarding whether foreign matter is present. Furthermore, the output unit 133 may output a control signal to cause the terminal device to perform a predetermined operation depending on whether foreign matter is present. For example, when the determination unit 132 determines that foreign matter is present, the output unit 133 may output a control signal to cause the terminal device to generate an alarm sound. The output unit 133 may send an email or the like containing the result of determination to the terminal device, the smartphone of the yard manager, or the like.

### (Foreign matter detection method)

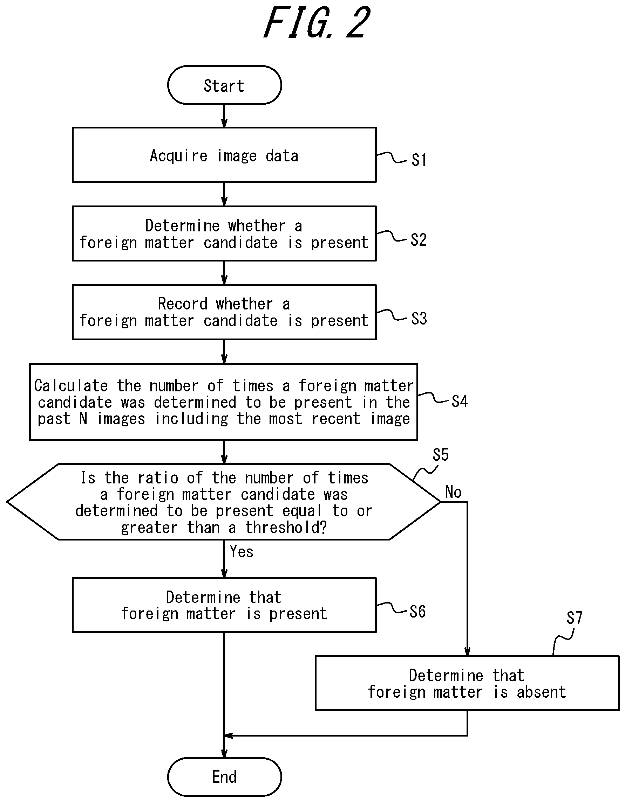

FIG. 2 is a flowchart illustrating processing of a foreign matter detection method according to the present embodiment. The processing of the foreign matter detection method is executed by the foreign matter detection device 10 and may, for example, be started when at least N images have been captured after the camera has started capturing images.

The image acquisition unit 131 acquires data of an image captured by the camera (step S1). The determination unit 132 determines whether a foreign matter candidate is present in the image acquired by the image acquisition unit 131 (step S2). The result of determination (presence or absence of a foreign matter candidate) by the determination unit 132 is recorded (step S3). That is, the presence or absence of a foreign matter candidate is associated with the acquired image and stored in the storage 12.

Here, the determination unit 132 may use a known method for object recognition in an image to detect a foreign matter candidate. For example, it is possible to use a model generated by machine learning that takes past images containing foreign matter and images not containing foreign matter as training data. As a specific example, a pre-trained deep learning model may be used. Such a model may also be used to determine the location of foreign matter.

In the present embodiment, the determination unit 132 determines whether foreign matter is present using not only one image (the most recently acquired image), but N (a plurality of) images. As described above, the result of determination (presence or absence of a foreign matter candidate) by the determination unit 132 is stored in the storage 12. The determination unit 132 acquires the result of determination for the past N images, including the most recent image, from the storage 12. The determination unit 132 calculates the number of times that a foreign matter candidate was determined to be present in the N images (step S4). The following description will be given assuming that the number of times that a foreign matter candidate was determined to be present in step S4 is k. The determination unit 132 also calculates the ratio (k/N) at which a foreign matter candidate was determined to be present.

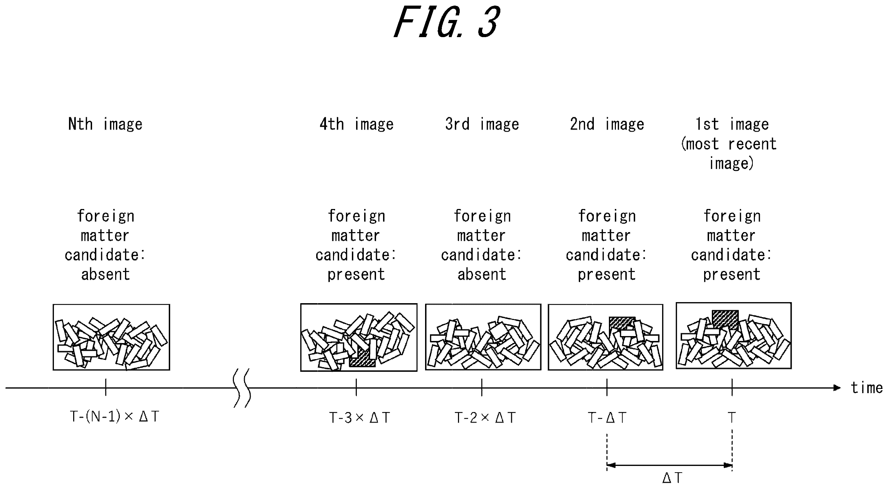

FIG. 3 is a diagram illustrating an example of N images. The time when the most recent image was acquired is defined as "T", and the acquisition interval is defined as "ΔT". The determination unit 132 acquires, from the storage 12, the presence or absence of a foreign matter candidate for the past N images up to T - (N - 1) × ΔT. In the example of FIG. 3, a foreign matter candidate is determined to be "present" in the first, second, and fourth images. Furthermore, in the example of FIG. 3, foreign matter candidates are determined to be "absent" in the third and N^{th} images. Here, if N is 5 in the example of FIG. 3, the number of times a foreign matter candidate was determined to be present is 3, yielding 60 % for the aforementioned ratio (k/N).

The determination unit 132 determines whether the ratio (k/N) of the number of times a foreign matter candidate was determined to be present is equal to or greater than a threshold (step S5). If the ratio (k/N) is equal to or greater than a threshold (Yes in step S5), the determination unit 132 determines that foreign matter is present in the target scrap pile (step S6). If the ratio (k/N) is less than the threshold (No in step S5), the determination unit 132 determines that foreign matter is absent from the target scrap pile (step S7). The determination result may be output to the terminal device by the output unit 133. Here, the threshold is 50 %, but this example is not limiting, and the threshold may be changed depending on, for example, the value of N. As a specific example, it is assumed that the interval (acquisition interval) at which the image acquisition unit 131 acquires images, that is, ΔT, is 10 s, the threshold is 50 %, and N is 5. In the example of FIG. 3, the ratio (k/N) is 60 %, which is equal to or greater than the threshold. The determination unit 132 thus determines that foreign matter is present.

According to the foreign matter detection method of the present embodiment, a plurality of images with different fields of view is captured for the same scrap, and foreign matter is detected based on the plurality of images. Therefore, foreign matter that is difficult to see from one direction can be detected in an image viewed from another direction, preventing the foreign matter from being overlooked. Furthermore, since foreign matter is detected based on a plurality of images, objects other than foreign matter can be prevented from being detected erroneously as foreign matter. Since foreign matter can be detected using only a plurality of images from the camera, the processing load is reduced, and the time required to obtain the result of determination can be shortened. Workers can obtain the result of determination nearly in real time and can therefore efficiently carry out inspection work and the like.

As described above, the foreign matter detection device 10 and foreign matter detection method according to the present embodiment can highly accurately identify foreign matter from a captured image of target scrap. Furthermore, for steel products produced by melting scrap, quality degradation due to contamination by impurity elements can be avoided. In the production of steel products, steam explosions and the like caused by contamination by sealed objects can also be avoided.

While embodiments of the present disclosure have been described with reference to the drawings and examples, it should be noted that various modifications and amendments may easily be implemented by those skilled in the art based on the present disclosure. Accordingly, such modifications and amendments are included within the scope of the present disclosure. For example, functions or the like included in each component, each process, or the like can be rearranged without logical inconsistency, and a plurality of components, processes, or the like can be combined into one or divided. Embodiments according to the present disclosure can also be realized as a program executed by a processor included in an apparatus or as a storage medium having the program recorded thereon. Such embodiments are also to be understood as included in the scope of the present disclosure.

In the above embodiment, the camera is attached to the arm of the heavy machinery. Here, the camera may be attached to parts other than the arm of the heavy machinery (for example, above the driver's seat). Even if the camera is attached to a part other than the arm, the camera moves together with the heavy machinery when the heavy machinery moves forward, backward, or turns. The camera can therefore always capture the tip of the arm. Also, the camera does not need to be attached to the heavy machinery as long as it can move in accordance with the movement of the arm. Specifically, the camera may be attached to an unmanned aerial vehicle (UAV), for example, and the UAV may fly around the heavy machinery so that the camera is always pointing at the tip of the arm.

### REFERENCE SIGNS LIST

- 10: Foreign matter detection device
- 11: Communication interface
- 12: Storage
- 13: Controller
- 131: Image acquisition unit
- 132: Determination unit
- 133: Output unit

## Claims

1. A foreign matter detection device for detecting foreign matter contained in scrap, the foreign matter detection device comprising:
an image acquisition unit configured to acquire an image captured by a camera that moves in accordance with an operation unit performing a predetermined operation on the scrap and captures an image of surroundings of the operation unit; and
a determination unit configured to detect a foreign matter candidate based on the image and determine whether foreign matter is present based on a result of detecting the foreign matter candidate.

2. The foreign matter detection device according to claim 1, wherein the operation unit is an arm of heavy machinery, and the camera is attached to the heavy machinery or the arm.

3. The foreign matter detection device according to claim 1 or 2, wherein
the camera captures a plurality of images with different fields of view, and
the determination unit is configured to detect the foreign matter candidate in each of the plurality of images and determine whether the foreign matter is present based on a result of detecting the foreign matter candidate in the plurality of images.

4. The foreign matter detection device according to claim 3, wherein the image acquisition unit is configured to acquire the plurality of images at time intervals of 30 seconds or less.

5. A foreign matter detection method for detecting foreign matter contained in scrap, the method comprising:
acquiring an image captured by a camera that moves in accordance with an operation unit performing a predetermined operation on the scrap and captures an image of surroundings of the operation unit; and
detecting a foreign matter candidate based on the image and determining whether foreign matter is present based on a result of detecting the foreign matter candidate.
